(19) **Europäisches Patentamt**

**European Patent Office**

**Office européen des brevets**

(11) **EP 0 738 865 B1**

(12) **EUROPEAN PATENT SPECIFICATION**

(45) Date of publication and mention
of the grant of the patent:
**23.08.2000  Bulletin 2000/34**

(51) Int Cl.$^7$: **F41B 15/08**, G10K 11/16

(21) Application number: **96101259.8**

(22) Date of filing: **30.01.1996**

(54) **Acoustic protection on payload fairings of expendable launch vehicles**

Akustischer Schutz an Nutzlastverkleidungen für Trägerraketen

Protection acoustique sur structures environnant la charge utile de lanceurs non-réutilisables

(84) Designated Contracting States:
**AT BE DE DK ES FR GB IE IT NL SE**

(30) Priority: **20.04.1995  CH 112995**
**21.06.1995  US 493050**

(43) Date of publication of application:
**23.10.1996  Bulletin 1996/43**

(73) Proprietors:
• **Contraves Space AG**
**8052 Zürich (CH)**
• **DORNIER GmbH**
**88039 Friedrichshafen (DE)**

(72) Inventors:
• **Borchers, Ingo U., Dr.**
**D-88690 Uhldingen/Mühlhofen (DE)**
• **Lämmlein, Stephan T.,Dr.**
**D-88677 Markdorf (DE)**
• **Bartels, Peter**
**D-88090 Immenstaad (DE)**
• **Rausch, Achim**
**D-88090 Immenstaad (DE)**
• **Faust, Markus, Dr.**
**D-88682 Salem (DE)**
• **Coebergh, Jan A.F.**
**CH-8707 Uetikon A. See (CH)**
• **Köble, Klaus**
**D-88074 Meckenbeuren (DE)**

(74) Representative: **Hotz, Klaus, Dipl.-El.-Ing./ETH**
**Patentanwalt**
**c/o OK pat AG**
**Hinterbergstrasse 36**
**Postfach 5254**
**6330 Cham (CH)**

(56) References cited:
**EP-A- 0 421 887**          WO-A-92/00183
**US-A- 3 174 580**          US-A- 3 887 031

**Description**

*FIELD OF THE INVENTION*

The invention relates to an acoustic protection on payload fairings of expendable launch vehicles in accordance with the preamble of claim 1

*BACKGROUND OF THE INVENTION*

In accordance with information contained in Brochure No. 3012, 1987, of Oerlikon-Bührle Holding Ltd., Zürich, Switzerland, payload fairings of expendable launch vehicles are intended to protect payloads, for example satellites to be lifted into orbit, against damage on the ground as well as during flight through the atmosphere. Because of their position on the nose of the launch vehicle in particular, the payload fairings are subjected to strong aerodynamic forces and severe heating, due to air friction in line with the increase in velocity. Noise emissions occur in connection with such launch vehicles during the start-up phase, but mainly during lift-off under full thrust, which can be more than 140 dB. Such intense acoustic loads can lead to damage of the payload, so that safety and reliability problems can occur there, which can lead, for example, to the failure of sub-systems such as solar cells, control and regulating systems, antennas, mechanisms, experiments, etc. i.e. at the limit, even to the total failure of the actual payload mission. The structure of the payload fairing offers a certain amount of protection against the above mentioned effects of the noise, but is insufficient in some cases, so that additional measures are required.

The generally known measures for preventing or reducing interfering damaging sound consist in equipping the walls with sound-absorbing materials, for example insulating panels or mats made of the most varied suitable materials. Multi-shell structures comprising damping and reverberant materials and alternatingly applied are also used. The design of acoustic protection on payload fairings of launch vehicles needs to be such that the acoustic protection must become effective particularly in a defined frequency range of the noise generated during lift-off which is critical for the payloads in respect to rigidity and/or strength. As verified in tests, the disadvantage in employing the above described conventional measures for noise reduction resides in that such an acoustic protection would be relatively heavy and much too large, so that valuable payload accomodation volume would be lost.

*US-A-3,174,580* discloses an acoustic protection which can be used for acoustic protection on payload fairings comprising acoustic absorbers arranged on sound-absorbing panels and tuned to a defined frequency range. The absorbers comprise a inwardly arranged cup-like portion and an outwardly arranged portion forming a horn which tapers on a curved-conical form from an opening of a larger diameter to an opening of a smaller diameter. The horn is entirely lodged within the panel and projects with it's whole height into the inwardly arranged portion on to a defined distance from the end wall of the inwardly arranged portion. It has been found that the sound damping effect of this acoustic protection in many cases is not satisfying, due to the fact that the entire horn is within the cup-like portion and within the panel.

*WO-92/00183* discloses a material for a panel which may be used for the purposes of the invention, but without any supplementary constructive elements.

*OBJECT AND SUMMARY OF THE INVENTION*

It is the object of the invention to propose an acoustic protection on payload fairings for expendable launch vehicles which effectively protects the payloads against noise emissions of the propulsion systems and does not have the disadvantages of conventional protective measures mentioned above.

This object is attained by means of the invention recited in claim 1. In this case acoustic absorbers are provided which are tuned to a defined frequency range. The acoustic absorbers are disposed on foamed plastic mats fastened on the inside of the payload fairing.

In accordance with a particular embodiment, the acoustic absorbers are assembled from a cup-like lower part and an upper part having a horn, wherein the horn tapers in a curved-conical manner from a large diameter to a small diameter and projects into the lower part up to a defined distance from its bottom. In the area of the smaller diameter, crown-shaped slits are provided in the wall of the horn for dissipating the directed energy flow occurring in the horn.

The advantages achieved by means of the invention reside in that the noise reduction values, proved by means of tests, in the frequency range < 90 Hz critical for the payload in respect to rigidity and/or strength, cannot be achieved by any known acoustic protection of comparable size or weight. To achieve the same effects, an acoustic protection of the conventional type would require a volume which would correspond to approximately six times that of the acoustic protection in accordance with the invention. The noise reduction values achieved have the effect of preventing damage, caused by noise emissions of the rocket propulsion system, to payloads which meet the mechanical quality requirements. The suggested acoustic protection is light and requires little space. The application of the foamed plastic mats equipped with acoustic absorbers by banding with the help of underpressure guarantees a complete connection with the inside of the payload fairing.

The invention will be explained in detail below by means of an exemplary embodiment and the attached drawings.

*BRIEF DESCRIPTION OF THE DRAWINGS*

Fig. 1 is a perspective representation of half of a payload fairing of an expendable launch vehicle, both halves of which are provided with the acoustic protection in accordance with the invention,

Fig. 2 is a perspective representation of a foamed plastic mat of the acoustic protection with several acoustic absorbers,

Fig. 3 is a partial cross section through a wall of the payload fairing with an acoustic absorber of the acoustic protection,

Fig. 4 is a longitudinal section through a lower part of the absorber along the line IV - IV of Fig. 5,

Fig. 5 is a cross section of the lower part of the absorber,

Fig. 6 is a longitudinal section through the upper part of the absorber viewed along the line VI - VI of Fig. 7,

Fig. 7 is a cross section of the upper part of the absorber,

Fig. 8 is a perspective representation of an assembly frame for the integration of the acoustic protection in accordance with Fig. 2,

Fig. 9 is a section along the line IX - IX of Fig. 8,

Fig. 10 is a schematic representation of the acoustic absorber, and

Fig. 11 is a schematic representation of the effects of sound waves on the payload fairing.

*DETAILED DESCRIPTION OF THE PREFERRED EMBODIMENT*

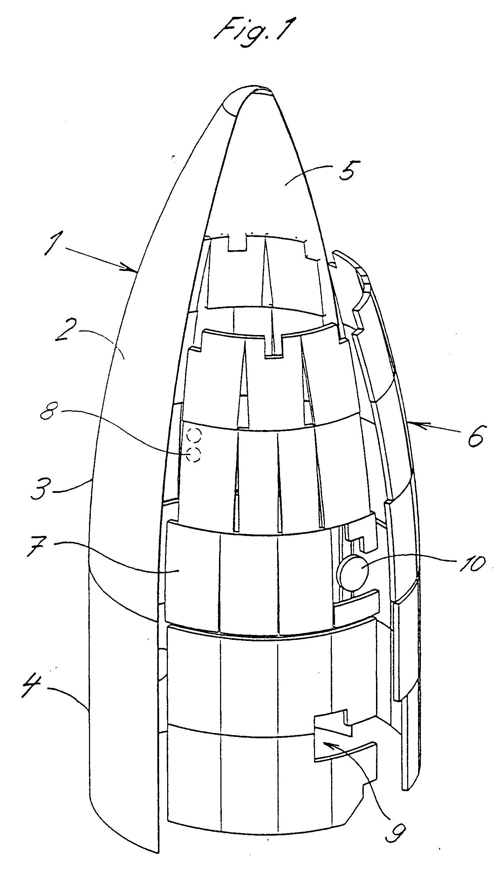

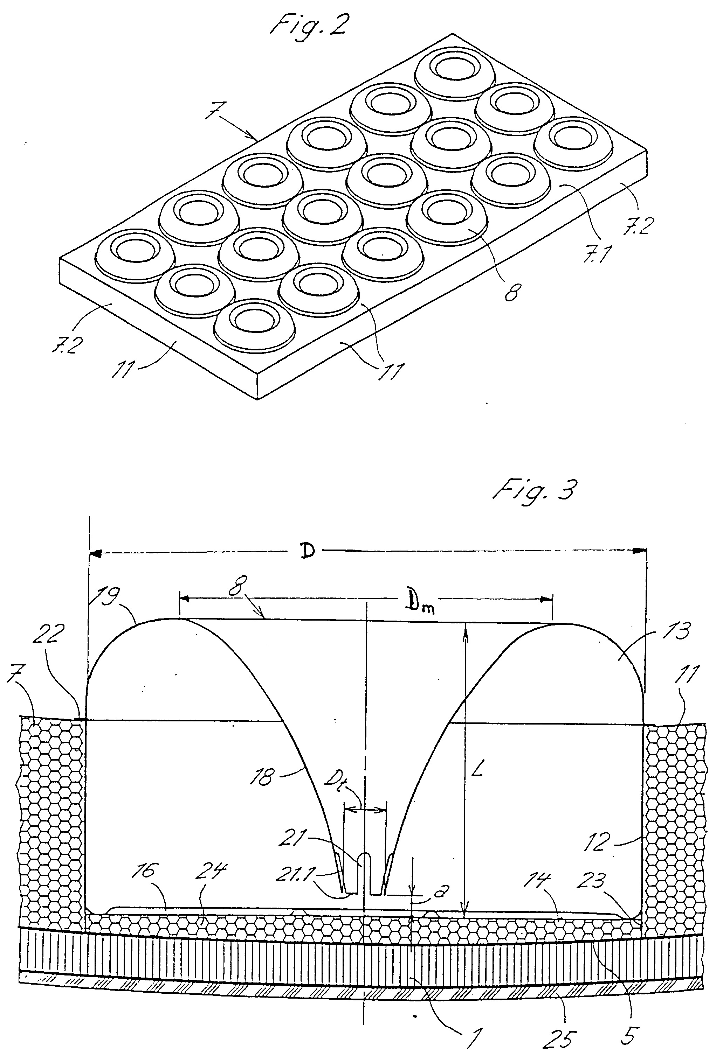

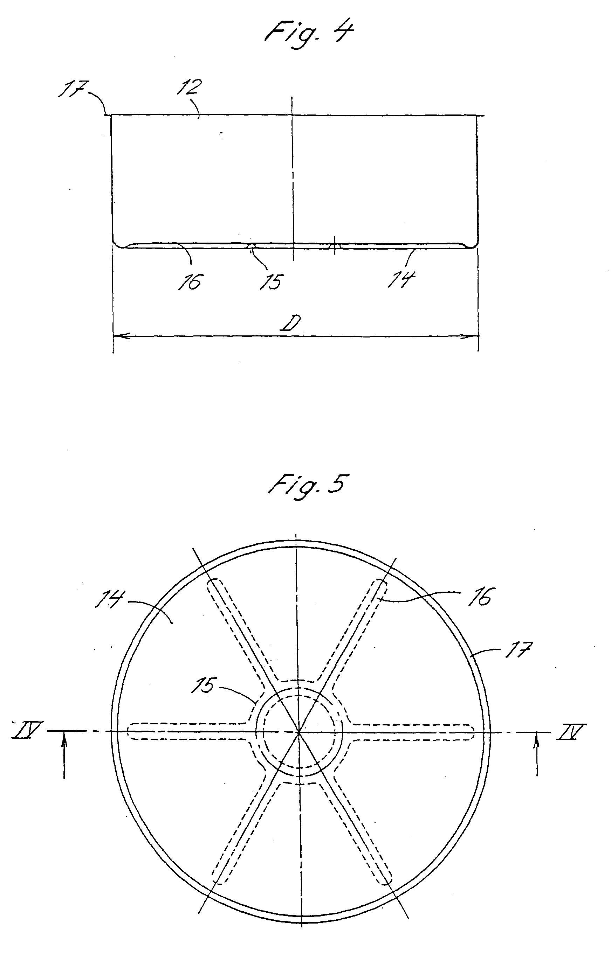

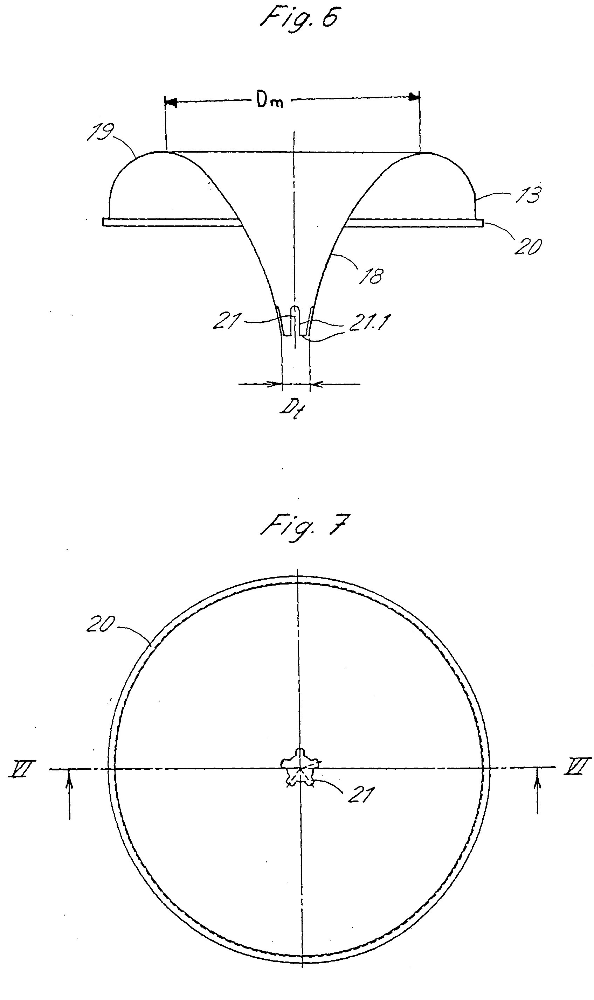

A payload fairing of an expendable launch vehicle is identified by 1 in Fig. 1 and consists of two half shells 2, only one of which is represented, which has an ogival or conical and a cylindrical part 3, 4. An acoustic protection 6 is fastened on the insides 5 of the half shells 2, consisting of sound-absorbing panels in the form of foamed plastic mats 7 lined up with each other, on which acoustic absorbers 8, which will be described in detail below by means of Figs. 3 to 7, are disposed. The acoustic absorbers 8 are arranged on a side of the foamed plastic mats 7 facing the payload accomodation volume 9 and are of different dimensions, taking into consideration the ogival or conical and cylindrical part 3, 4 of the payload fairing 1. An opening, identified by 10, can be cut into a foamed plastic mat 7 with acoustic absorbers 8 even after integration of the acoustic protection 6, so that access to the payload, for example in the form of a satellite, is possible following the completion of the assembly of the acoustic protection. A thermal protection insulation layer 25 (Fig. 3) is provided on the exterior of the payload fairing 1 and is intended to prevent the unacceptable heating of the payload fairing and the payload.

According to Fig. 2, a foamed plastic mat 7 is equipped for example, with eighteen acoustic absorbers, of circular cross section, which are fastened in a manner to be described in detail in connection with Fig. 3. The foamed plastic mats are preferably made of reticulated polyimide, for example the foamed plastic Solimide AC-406 of the firm Illbruck in Switzerland. In an advantageous form they are of a thickness of 10 cm. The foamed plastic mats 7 have special mechanical strength properties. The rigidity of the foamed plastic is very low in the circumferential direction parallel with the surface of the payload fairing 1, so that the dynamic behavior of the half shells 2 of the payload fairing 1 is not significantly affected when being separated and jettisoned from the launch vehicle. The strength of the foamed plastic perpendicular to the top of the payload fairing 1 is sufficiently great so that the absorbers 8 are securely held during the heavy vibrations of the payload fairing 1 during the start-up phase of the launch vehicle as well as during the extreme shock and deformation loads when the payload fairing 1 is separated in two halves from the launch vehicle.

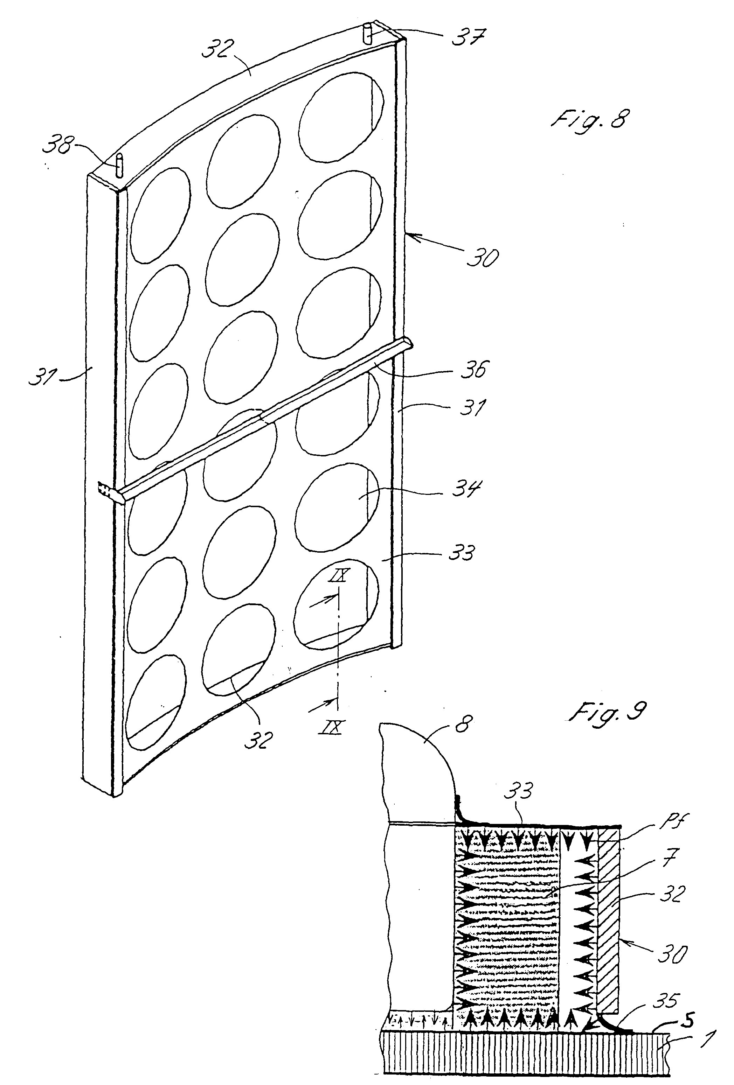

These properties are attained by an appropriate alignment of the foamed plastic pores. They have an elongated form in the shape of an oval. The longitudinal axis of the pores is aligned perpendicularly with the surface of the payload fairing 1. On the top 7.1 and the lateral faces 7.2, the foamed plastic mats are covered with a thin protective foil 11 consisting, for example, of polyester (Orcon), which is intended to prevent the penetration of particles (dust, dirt) into the payload accomodation volume. The protective foil 11 has fine perforations for assuring differential pressure compensation during the ascent of the launch vehicle. As will be described in more detail below by means of Figs. 8 and 9, the undersides of the foamed plastic mats 7 not covered by the protective foil are bonded to the insides 5 of the half shells 2 with by means of an underpressure integration device. 100% adhesion, effective on the entire supporting surface of the foamed plastic mats 7, is achieved by means of this process.

In Figs. 3 to 7, a lower part of the acoustic absorber 8 is identified by 12 and an upper part by 13. The lower part 12 is embodied in a cup shape and has on ist bottom 14 a circular stiffening bead 15, from which several radial beads 16 extend in the direction toward the edge of the bottom 14. A flange 17 is provided on the upper rim of the lower part 12. The lower part 12 is preferably made of an aluminum sheet of a thickness of less than 0.5 mm, in particular 0.3 to 0.4 mm, by a deep-drawing process. The upper part 13 has a horn 18 which, in the area of its opening with the largest diameter (horn mouth), makes a transition via a torus 19 into an edge 20, angularly shaped in cross section. In connection with lower noise levels (< 130 dB) it is possible to further increase the absorption effect of the absorber 8 by the disposition of a permeable layer (not shown in the drawings) across the horn mouth $D_m$. The horn 18 tapers in a conical arc shape from the opening with the larger diameter $D_m$ (horn mouth) toward an opening of smaller diameter $D_t$ (horn throat). Five slits 21 are provided in the area of the horn throat, which have sharp edges 21.1 and which are offset in respect to each at an angle of 72° (horn crown). The five slits of the horn crown have a flow-through area of a width b and a height c. The individual slits have an arc-shaped curvature at the top. Increased structural tolerances in particular in respect to the distance a to the bottom become possible because of the arc- and crown-shaped design of the slits 21. In an advantageous embodiment, wherein the slits are adapted to a high sound level, (> 130 dB), the width b is 5.6 mm and the height c is 20 mm. The upper part 13 is preferably made of an aluminum sheet of a thickness of less than 0.5 mm, in particular 0.3 to 0.4 mm, by a spinning process. The upper part 13 and lower part 12 can also be made from other sheet-metals or plastic (but then possibly with different dimensions). The injection molding process can be advantageously used when the lower part 12 and the upper part 13 are made of plastic. In the course of assembling the lower part 12 and the upper part 13, the angle-shaped rim 20 is connected with the rim 17 by crimping, wherein a crimped flange 22 is formed and the horn 18 projects into the lower part 12 as far as a defined distance a from the bottom 14. The material, dimensions and production process are selected such that they resist all mechanical and thermal loads during the ascent of the launch vehicle and the separation of the payload fairing 1 from the launch vehicle. Circular cutouts from the foamed plastic mat 7 are indicated by 23 and the acoustic absorbers 8 are inserted into them, wherein they rest with the crimped flange 22 on the top 7.1 of the foamed plastic mat 7 and are bonded together with it. A bonded-on foamed plastic disk 24 is provided at the bottom 14 of the acoustic absorber 8. The mechanical connection of the absorber 8 with the payload fairing 1 is provided exclusively via the foamed plastic mat 7 and the foamed plastic disks 24.

The foamed plastic disk 24 has the same particular mechanical properties in regard to rigidity and strength as the foamed plastic mat 7 and is preferably made of the same material.

Once the acoustic protection 6 is bonded together with the payload fairing 1, as shown in Fig. 3, its structural resonance frequencies preferably lie above the frequency range of the acoustic effectiveness of the absorber 8 by a factor > 1.5. In this way the acoustical resonance frequency is decoupled from the structural resonance frequency.

To attain sufficient sound absorption at frequencies < 90 Hz, the length L of the absorber 8 is selected to be greater than 100 mm.

In a preferred embodiment, in which the sound-absorbing effectiveness lying in the frequency range < 90 Hz, in particular in the 31.5 and 63 Hz octave band, is optimized, the acoustic absorber 8 has a length L of 135 mm, a diameter D of 249.6 mm, a diameter $D_t$ of the horn throat of 18 mm and a distance a of 10 mm between the horn 18 and the bottom 14.

In this embodiment of the absorber 8 the structural resonance frequencies of the acoustic protection 6 lie in the range of > 150 Hz. Its weight per unit area, including the adhesive for fastening on the payload fairing 1, is less than 3.5 kg/m$^2$.

In accordance with Figs. 8 and 9, an assembly frame 30 adapted to the size of the foamed plastic mats 7 consists of two angle-shaped linear supports 31 and two transverse supports 32 which are fixedly connected with each other. A sealing mask 33, for example of caoutchouc, is disposed on the top of the assembly frame 30 and in correspondence to the standardized foamed plastic mat 7 has eighteen circular cutouts 34 to receive the acoustic absorbers 8 fastened in the foamed plastic mat 7. The diameters of the cutouts 34 are less than the diameters of the acoustic absorbers 8, so that the sealing mask 33 is deformed when the assembly frame 30 is placed on it and, when underpressure is applied, it rests airtight against the acoustic absorbers 8. Sealing lips 35, which can also be made of caoutchouc, for example, are provided on the lower edges of the linear supports 31 and the transverse supports 32.

The two linear supports 31 are connected at the center by at least one strip 36. A suction connector 37, which can be connected with an underpressure generator, not shown in detail, and a pressure control connector 38 are provided in one of the transverse supports 32.

For fastening the foamed plastic mats 7 on the inside 5 of the payload fairing 1, the assembly frame 30 is placed around the foamed plastic mat 7 respectively to be bonded-on and an underpressure is generated which is effective in the entire foamed plastic mat 7 (see the direction of effectiveness of the exterior pressure indicated by the arrows Pf in Fig. 9), so that the surfaces to be bonded together are well pressed together in all places. The under-pressure is maintained until the adhesive connection has cured.

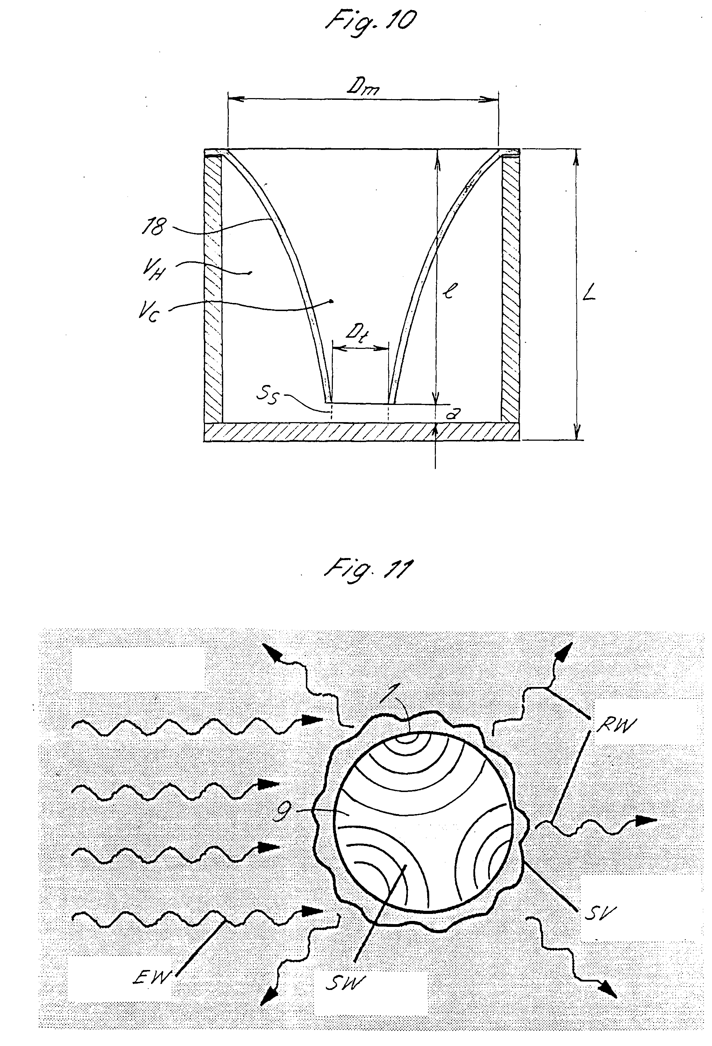

In Fig. 10, the diameter of a horn mouth is indicated by $D_m$, a horn volume by $V_c$, a cell volume by $V_H$ and the length of the horn 18 by l. The distance a, the length L and the diameter $D_t$ of the horn throat have the same meaning as in Figs. 3 to 7. $S_S$ indicates a slit area calculated from the distance a and the diameter $D_t$ of the horn throat.

In accordance with Fig. 11, emitted sound waves, symbolized by wavy lines, are indicated by EW, reflected sound waves by RW and vibrations by SV, and standing waves symbolized by curved lines by SW.

The dimensions of the acoustic absorber 8 described above by means of Figs. 3 to 7 and required for a defined frequency range can be determined in a manner similar to the resonators proposed by Helmholtz and used for acoustic analyses. In their original form such resonators consisted of hollow spheres with two oppositely located openings, one of which was directed toward the sound source, the other was formed to fit an ear and was applied like an ear trumpet. If a sound source generates frequency components which correspond to a large extent with the resonance frequency of the hollow sphere resonator, it will amplify this harmonic, which will be the only one which can be heard.

The proposed acoustic absorber 8 in accordance with Fig. 10 can be considered as an optimized Helmholtz resonator/absorber, whose special properties mainly result from the combination of the cell volume $V_H$, horn volume $V_c$ and the slit area $S_S$. In an analogy with a mechanical spring/mass system, the cell volume $V_H$ operates similar to a spring, wherein the air in the area of the slit area $S_S$, which vibrates because of the external sound effect, can be considered as mass m. This vibrating mass m is increased to a mass m∗ by the vibrating air in the horn volume $V_c$, so that the vibration system yields a lower resonance frequency, the level of which is determined by the size and shape of the acoustic absorber 8.

In detail, the resonance frequency f of the acoustic absorber 8 is a function of the following parameters:

- ■ $S_t$, the cross sectional area related to the diameter $D_t$ of the horn throat,
- ■ $V_H$, the cell volume,
- ■ $D_t$, the diameter of the horn throat,
- ■ $D_m$, the diameter of the horn mouth,
- ■ l, the horn length.

In the above mentioned spring/mass system, the resonance frequency $f_o$ is given by

$$f_0 = \frac{1}{2\pi}\sqrt{\frac{S}{m}} \qquad \textit{Equation 1}$$

wherein S means the spring stiffness which corresponds to the stiffness of the cell volume $V_H$ and which results from the relationship:

$$S = \frac{\rho c^2 S_S^2}{V_H}. \qquad \textit{Equation 2}$$

wherein **c** is the speed of sound and $\rho$ the specific mass of the cell volume continuum. The effective vibrating mass **m*** can be expressed by:

$$m^* = \rho S_S \, \ell^*, \qquad \textit{Equation 3}$$

wherein **l\*** means the effective height of the vibration continuum. If the equations **2** and **3** are inserted into the equation **1**, the classic relationship for the resonance frequency in a Helmholtz resonator/absorber is obtained:

$$f_{0_H} = \frac{c}{2\pi} \sqrt{\frac{S_S}{V_H\, \ell^*}} \qquad \textit{Equation 4}$$

and, with **I\*** corresponding to **I\*$_{SAA}$**, wherein **SAA** stands for "Special Acoustic Absorber", and the cross-sectional area $S_t$ related to the diameter $D_t$ of the horn throat, the lower resonance frequency of the acoustic absorber 8 is obtained:

$$f_{0_{SAA}} = \frac{c}{2\pi} \sqrt{\frac{S_t}{V_H\, \ell^*_{SAA}}} \qquad \textit{Equation 5}$$

In equation 5 **I\*$_{SAA}$** is referenced to the throat area **S$_t$** and is composed of the three components relating to the horn throat, the horn cone and the horn mouth:

$$I^*_{SAA} = I^*_t + I^*_c + I^*_m \qquad \textit{Equation 6}$$

$$m^*_{SAA} = S_t I^*_{SAA} \qquad \textit{Equation 7}$$

While the effective length **I\*$_t$** of the horn throat and **I\*$_m$** of the horn mouth were obtained by means of tests, the effective length **I\*$_c$** relating to the horn cone can be calculated with the aid of the equivalent kinetic energy of the vibrating continuum. Assuming that all gas particles within the cone are vibrating in phase to each other, the continuity equation reads:

$$u_{t\sim} S_t = u_{x\sim} S_x = u_{m\sim} S_m. \qquad \textit{Equation 8}$$

applies. The kinetic energy of the vibrating continuum is defined as:

$$E_{kin_c} = \frac{\rho}{2} \int_{L-\ell}^{L} S_x u_{x\sim}^2 \, dx = \frac{\rho}{2} \ell^*_c S_t\, u_{t\sim}^2. \qquad \textit{Equation 9}$$

Introducing

$$S_x = S_t \left( \frac{x}{(L-\ell)} \right)^2$$

and

$$u_{x\sim}^2 = u_{t\sim}^2 \left( \frac{S_t}{S_x} \right)^2, \qquad \textit{Equation 10}$$

wherein **S$_x$** is the local cross-sectional area of the horn at the axial coordinate x, l is the horn length, **u$_{x\sim}$** is the local particle velocity(axially directed, oscillating) and **u$_{t\sim}$** is the local particle velocity in the horn throat.

The evaluation of equation 9 yields:

$$\ell^*_c = \frac{L-\ell}{L}\ell = \frac{D_t}{D_m}\ell. \qquad \textit{Equation 11}$$

When inserting equation 11 into equation 6, and equation 6 into equation 5, the approximated lower resonance frequency of the Special Acoustic Absorber (SAA), equation 5, can be expressed by:

$$f_{o_{SAA}} \approx \frac{c}{2\pi} \sqrt{\frac{S_l}{V_H \left( \ell_l^* + \frac{D_l}{D_m} \ell + \ell_m^* \right)}} \qquad Equation\ 12$$

Therefore, it is possible to approximately obtain the desired lower resonance frequency of the acoustic absorber 8 with equation 12 by selecting the dimensions and the shapes.

The mode of functioning of the above described acoustic protection will be described in greater detail by means of Figs. 1, 3 and 11:

The sound waves EW generated by the noise emission from the propulsion system of the rocket impinge on the payload fairing 1, in the course of which reflected sound waves RW are generated and the payload fairing 1 is set into vibration SV. In the course of this, standing waves SW are generated within the payload accomodation volume 9 which act on the acoustic protection 6. The sound absorption of the foamed plastic mats 7 is effective in the frequency range of > 100 Hz and that of the acoustic absorber 8 at frequencies of < 90 Hz. Based on the special shaping of the acoustic absorber 8, the pulsing air flow of the impinging sound waves is bundled in the process, so that high flow velocities are attained in the slits 21 of the horn 18. Flow separation occurs at the sharp edges 21.1 of the slits 21, because of which the directed flow energy is converted into turbulence and finally into heat (dissipation).

List of Reference Numerals:

| | |
|---|---|
| 1 | Payload fairing |
| 2 | Half shells |
| 3 | Ogival part |
| 4 | Cylindrical part |
| 5 | Insides |
| 6 | Acoustic protection |
| 7 | Foamed plastic mats |
| 7.1 | Top |
| 7.2 | Lateral faces |
| 8 | Acoustic absorber |
| 9 | Payload accomodation volume |
| 10 | Opening |
| 11 | Protective foil |
| 12 | Lower part |
| 13 | Upper part |
| 14 | Bottom |
| 15 | Circular bead |
| 16 | Radial beads |
| 17 | Rim |
| 18 | Horn |
| 19 | Torus |
| 20 | Angle-shaped rim |
| 21 | Slits |
| 21.1 | Sharp edges |
| 22 | Crimped flange |
| 23 | Circular cutouts |
| 24 | Foamed plastic disk |
| 25 | Thermal protection insulation layer |
| 30 | Assembly frame |
| 31 | Linear support |

32   Transverse support
33   Sealing mask
34   Circular cutouts
35   Sealing lips
36   Strip
37   Suction connector
38   Control connector

$D_m$   Diameter of the horn mouth
$D_t$   Diameter of the horn throat
$V_C$   Horn volume
$V_H$   Cell volume
l    Length of the horn
a    Distance horn - bottom
b    Width of the crown-shaped slit
c    Height of the crown-shaped slit
L    Length of the absorber
D    Diameter of the absorber
$S_S$   Slit area
Pf   Arrows

EW  Emitted sound waves
RW  Reflected sound waves
SV   Vibrations
SW  Standing waves

SAA   Special Acoustic Absorber

**Claims**

1. An acoustic protection on payload fairings of expendable launch vehicles, wherein the acoustic protection (**6**) is fastened on the payload fairing (**1**) of the expendable launch vehicles, wherein

   - acoustic absorbers (**8**) tuned to a defined frequency range are provided,
   - which are arranged on sound-absorbing panels (**7**) disposed on the insides (**5**) of the payload fairing (**1**), whereby
   - each acoustic absorber (**8**) comprises a lower part with of cup-like bore in the panel and an upper part (**13**) having a horn (**18**),
   - the horn (**8**) tapers in a curved-conical form from an opening of larger diameter (**$D_m$**) to an opening of smaller diameter (**$D_t$**), and
   - the horn (**18**) projects into the lower part (**12**) up to a defined distance (**a**) from the bottom of the lower part (**12**),

   **characterized in that**
   the lower part further comprises a cup-like portion (**12**) assembled with the upper part (**13**), the cup-like portion (**12**) matching with the cup-like bore and being lodged therein.

2. An acoustic protection in accordance with claim 1, characterized in that in the area of the smaller diameter ($D_t$), slits (21) are provided in the wall of the horn (18).

3. An acoustic protection in accordance with claim 2,
   characterized in that
   a permeable layer is applied to the horn opening of larger diameter ($D_m$).

4. An acoustic protection in accordance with claim 2 or 3,
   characterized in that
   the slits (21) have sharp edges (21.1).

**5.** An acoustic protection in accordance with claim 4,
characterized in that
five slits (21) are provided which are offset by an angle of 72° from each other.

**6.** An acoustic protection in accordance with claim 4 or 5,
characterized in that
the width (b) of the slits (21) is 5.6 mm and the height (c) of the slits (21) is 20 mm.

**7.** An acoustic protection in accordance with claim 2,
characterized in that

- a rim (17) is provided on the upper edge of the lower part (12),
- in the area of its opening of larger diameter, the horn (18) makes a transition via a torus (19) into a rim (20) which is angle-shaped in cross section, and
- in the course of assembling the lower part (12) and the upper part (13), the angle-shaped rim (20) is connected with the rim (17) by crimping.

**8.** An acoustic protection in accordance with claim 2,
characterized in that
the lower part (12) and the upper part (13) are made of shet-metal.

**9.** An acoustic protection in accordance with claim 6,
characterized in that
the sheet-metal thickness is less than 0.5 mm, in particular is 0.3 to 0.4 mm.

**10.** An acoustic protection in accordance with claim 6,
characterized in that
the shet-metal is an aluminum sheet.

**11.** An acoustic protection in accordance with claim 2,
characterized in that
the lower part (12) and the upper part (13) are made of plastic.

**12.** An acoustic protection in accordance with claim 2,
characterized in that
the lower part (12) and the upper part (13) are produced by means of the injection molding process.

**13.** An acoustic protection in accordance with claim 2,
characterized in that
the acoustic absorber (8) has a length (L) of > 100 mm.

**14.** An acoustic protection in accordance with claim 2,
characterized in that
the acoustic absorber (8) has a length (L) of 135 mm, a diameter (D) of 249.5 mm, a diameter ($D_t$) of the horn throat of 18 mm and a distance (a) of 10 mm between the horn (18) and the bottom (14).

**15.** An acoustic protection in accordance with claim 2,
characterized in that
the acoustic absorber (8) is tuned to an acoustical frequency < 90 Hz, in particular in one of the octave bands of 31.5 and 63 Hz.

**16.** An acoustic protection in accordance with claim 15,
characterized in that
the structural resonance frequency of the absorber (8) is > 150 Hz.

**17.** An acoustic protection in accordance with claim 2,
characterized in that
the resonance frequency ($f_{oSAA}$) of the absorber (8) is determined in accordance with the equation

$$f_{o_{S\Lambda\Lambda}} \approx \frac{c}{2\pi} \sqrt{\frac{S_t}{V_H\left(\ell_t^* + \frac{D_t}{D_m}\ell + \ell_m^*\right)}}$$

wherein

$S_t$ means the cross-sectional area related to the diameter $D_t$ of the horn throat,
$V_H$, the cell volume,
$D_t$, the diameter of the horn throat,
$D_m$, the diameter of the horn mouth,
$l$, the horn length, and
$l_t^* + l_m^*$, are values determined by tests and relating to the horn throat and the horn mouth.

**18.** An acoustic protection in accordance with claim 1,
characterized in that
the sound-absorbing panels are foamed plastic mats (7) made of reticulated polyimide.

**19.** An acoustic protection in accordance with claim 1,
characterized in that
the foamed plastic mats (7) have oval, elongated pores whose longitudinal axes are essentially arranged perpendicularly in relation to the area of the payload fairing (1).

**20.** An acoustic protection in accordance with claim 19,
characterized in that
the foamed plastic mats (7) are made of the foamed plastic Solimide AC-406 of the firm Illbruck of Switzerland.

**21.** An acoustic protection in accordance with claim 20,
characterized in that
the foamed plastic mats (7) have a thickness of approximately 10 cm.

**22.** An acoustic protection in accordance with claim 18,
characterized in that
foamed plastic mats (7) of the same size and with the same number of acoustic absorbers (8) are provided.

**23.** An acoustic protection in accordance with claim 18,
characterized in that
the foamed plastic mats (7) are covered with a thin protective foil (11) of polyester on the top (7.1) and the lateral faces (7.2).

**24.** An acoustic protection in accordance with claim 23,
characterized in that
the protective foil (11) consists of a polyester material called Orcofilm of Orcon Corp.

**25.** An acoustic protection in accordance with claim 23,
characterized in that
the protective foil (11) has perforations.

**26.** An acoustic protection in accordance with claim 18,
characterized in that
the absorbers (8) are inserted into circular cutouts (23) of the foamed plastic mats (7), wherein they rest with a crimped flange (22) on a top (7.1) of the foamed plastic mats (7) and are bonded together with the latter, and that a bonded-in foamed plastic disk (24) is provided on the bottom (14) of the acoustic absorber (8).

**27.** An acoustic protection in accordance with claim 26,

characterized in that

the foamed plastic disk (24) has oval, elongated pores whose longitudinal axes are essentially arranged perpendicularly in relation to the area of the payload fairing (1).

**28.** An acoustic protection in accordance with claim 27,

characterized in that

the foamed plastic disk (24) is made of the same material as the foamed plastic mat (7).

**29.** An acoustic protection in accordance with claim 18,

characterized in that

with the absorbers (8) inserted, the foamed plastic mats (7) are bonded together with the inside (6) of the payload fairing (1) with the aid of an application of underpressure, wherein an assembly frame (30) is placed on top of the foamed plastic mat (7) which is respectively to be bonded down and underpressure is generated which is effective in the entire foamed plastic mat (7).

**30.** An acoustic protection in accordance with claim 29,

characterized in that

- the assembly frame (30) consists of two angle-shaped linear supports (31) and two transverse supports (32) which are fixedly connected with each other,
- a sealing mask (33), which has circular cutouts (34) to receive the acoustic absorbers (8), is placed on top of the assembly frame (30),
- sealing lips (35) are provided on the lower edges of the linear supports (31) and transverse supports (32),
- the linear supports (31) are connected at the center by at least one strip (36), and
- a suction connector (37) and a pressure control connector (38) are provided in one of the transverse supports (32).

**31.** An acoustic protection in accordance with claim 1,

characterized in that

the weight per unit area, including the adhesive for fastening on the payload fairing (1) is less than 3.5 kg/m$^2$.

**Patentansprüche**

**1.** Ein Schallschutz für Nutzlastverkleidungen bei Trägerraketen, wobei der Schallschutz (**6**) auf der Nutzlastverkleidung (**1**) der Trägerraketen befestigt ist,

wobei

- auf einen bestimmten Klangfrequenzbereich abgestimmte Schallabsorber (**8**) eingesetzt werden,
- welche auf schallabsorbierenden Matten (**7**) auf der Innenseite (**5**) der Nutzlastverkleidung (**1**) angebracht werden, wobei
- jeder Schallabsorber (**8**) aus einem Unterteil mit einer napfförmigen Bohrung in der Matte und einem Oberteil (**13**) mit Trichter (**18**) besteht,
- der Trichter (**8**) sich in einer bogenförmig-konischen Linie von einer Öffnung mit größerem Durchmesser (**$D_m$**) zu einer Öffnung mit kleinerem Durchmesser (**$D_t$**) verjüngt, und
- der Trichter (**18**) bis zu einem bestimmten Abstand (**a**) zum Boden des Unterteils (**12**) in das Unterteil (**12**) hineinragt,

**dadurch gekennzeichnet, daß**

das Unterteil ferner aus einem napfförmigen Teil (**12**) besteht, das mit dem Oberteil (**13**) verbunden ist, wobei das napfförmige Teil (**12**) mit der Größe der napfförmigen Bohrung übereinstimmt und in dieser ruht.

**2.** Ein Schallschutz nach Anspruch 1, dadurch gekennzeichnet, daß

im Bereich des kleineren Durchmessers ($D_t$) die Wandung des Trichters (18) mit Schlitzen (21) versehen ist.

**3.** Ein Schallschutz nach Anspruch 2, dadurch gekennzeichnet, daß

die Trichteröffnung mit dem größeren Durchmesser ($D_m$) mit einer durchlässigen Schicht versehen ist.

**4.** Ein Schallschutz nach mindestens einem der Ansprüche 2 oder 3, dadurch gekennzeichnet, daß
die Schlitze (21) über scharfe Kanten (21.1) verfügen.

**5.** Ein Schallschutz nach Anspruch 4, dadurch gekennzeichnet, daß
fünf Schlitze (21) vorhanden sind, die in einem Winkel von 72° gegeneinander versetzt sind.

**6.** Ein Schallschutz nach mindestens einem der Ansprüche 4 oder 5,
dadurch gekennzeichnet, daß
die Breite (b) der Schlitze (21) 5,6 mm beträgt und die Höhe (c) der Schlitze (21) 20 mm beträgt.

**7.** Ein Schallschutz nach Anspruch 2, dadurch gekennzeichnet, daß

- die obere Kante des Unterteils (12) mit einer Krempe (17) versehen ist,
- der Trichter (18) im Bereich seiner Öffnung mit dem größeren Durchmesser über einen Torus (19) in einen im Querschnitt winkelförmigen Rand (20) übergeht, und
- bei der Montage von Unterteil (12) und Oberteil (13) der winkelförmige Rand (20) mit der Krempe (17) durch Aufstecken verbunden wird.

**8.** Ein Schallschutz nach Anspruch 2, dadurch gekennzeichnet, daß
Unterteil (12) und Oberteil (13) aus Metallblech gefertigt sind.

**9.** Ein Schallschutz nach Anspruch 6, dadurch gekennzeichnet, daß
die Stärke des Metallblechs unter 0,5 mm liegt, insbesondere zwischen 0,3 und 0,4 mm.

**10.** Ein Schallschutz nach Anspruch 6, dadurch gekennzeichnet, daß es sich bei dem Metallblech um Aluminiumblech handelt.

**11.** Ein Schallschutz nach Anspruch 2, dadurch gekennzeichnet, daß
Unterteil (12) und Oberteil (13) aus Kunststoff gefertigt sind.

**12.** Ein Schallschutz nach Anspruch 2, dadurch gekennzeichnet, daß
Unterteil (12) und Oberteil (13) im Spritzgußverfahren hergestellt werden.

**13.** Ein Schallschutz nach Anspruch 2, dadurch gekennzeichnet, daß
die Länge (L) des Schallabsorbers (8) > 100 mm beträgt.

**14.** Ein Schallschutz nach Anspruch 2, dadurch gekennzeichnet, daß
der Schallabsorber (8) eine Länge (L) von 135 mm, einen Durchmesser (D) von 249,5 mm, einen Durchmesser ($D_t$) des Trichterhalses von 18 mm und einen Abstand (a) zwischen Trichter (18) und Boden (14) von 10 mm besitzt.

**15.** Ein Schallschutz nach Anspruch 2, dadurch gekennzeichnet, daß
der Schallabsorber (8) auf eine Klangfrequenz < 90 Hz, insbesondere in einem der Oktavbänder von 31,5 oder 63 Hz abgestimmt ist.

**16.** Ein Schallschutz nach Anspruch 15, dadurch gekennzeichnet, daß die strukturelle Resonanzfrequenz des Schallabsorbers (8) > 150 Hz ist.

**17.** Ein Schallschutz nach Anspruch 2, dadurch gekennzeichnet, daß die Resonanzfrequenz ($f_{OSSA}$) des Schallabsorbers (8) gemäß der Gleichung bestimmt wird,
wobei

$S_t$ für die Querschnittsfläche bezogen auf den Durchmesser $D_t$ des Trichterhalses steht,
$V_H$ für das Zellvolumen,
$D_t$ für den Durchmesser des Trichterhalses,
$D_m$ für den Durchmesser der Trichteröffnung,
l für die Trichterlänge,
und $l^*_t$ und $l^*_m$ durch Tests ermittelte und auf Trichterhals und Trichteröffnung bezogene Werte darstellen.

**18.** Ein Schallschutz nach Anspruch 1, dadurch gekennzeichnet, daß
es sich bei den schallabsorbierenden Platten um Schaumstoffmatten (7) aus retikuliertem Polyimid handelt.

**19.** Ein Schallschutz nach Anspruch 1, dadurch gekennzeichnet, daß
die Schaumstoffmatten (7) über länglich-ovale Poren verfügen, deren Längsachsen im wesentlichen senkrecht zur Fläche der Nutzlastverkleidung (1) ausgerichtet sind.

**20.** Ein Schallschutz nach Anspruch 19, dadurch gekennzeichnet, daß
die Schaumstoffmatten (7) aus dem Schaumstoff Solimid AC-406 der Schweizer Firma Illbruck gefertigt sind.

**21.** Ein Schallschutz nach Anspruch 20, dadurch gekennzeichnet, daß
die Stärke der Schaumstoffmatten (7) etwa 10 cm beträgt.

**22.** Ein Schallschutz nach Anspruch 18, dadurch gekennzeichnet, daß
Schaumstoffmatten (7) von gleicher Größe und mit der gleichen Anzahl an Schallabsorbern (8) verwendet werden.

**23.** Ein Schallschutz nach Anspruch 18, dadurch gekennzeichnet, daß
Oberseite (7.1) und Seitenflächen (7.2) der Schaumstoffmatten (7) mit einer dünnen Schutzfolie (11) aus Polyester bezogen sind.

**24.** Ein Schallschutz nach Anspruch 23, dadurch gekennzeichnet, daß
die Schutzfolie (11) aus einem Polyestermaterial mit Namen Orcofilm von der Firma Orcon Corp. besteht.

**25.** Ein Schallschutz nach Anspruch 23, dadurch gekennzeichnet, daß
die Schutzfolie (11) mit Perforationen versehen ist.

**26.** Ein Schallschutz nach Anspruch 18, dadurch gekennzeichnet, daß
die Schallabsorber (8) in runde Ausschnitte (23) der Schaumstoffmatten (7) eingesetzt werden, wo sie mit einer Krempe (22) auf der Oberseite (7.1) der Schaumstoffmatten (7) ruhen und mit letzteren verbunden werden, und daß der Boden (14) des Schallabsorbers (8) mit einer Schaumstoffscheibe (24) verleimt ist.

**27.** Ein Schallschutz nach Anspruch 26, dadurch gekennzeichnet, daß
die Schaumstoffscheiben (24) über länglich-ovale Poren verfügen, deren Längsachsen im wesentlichen senkrecht zur Fläche der Nutzlastverkleidung (1) ausgerichtet sind.

**28.** Ein Schallschutz nach Anspruch 27, dadurch gekennzeichnet, daß
die Schaumstoffscheiben (24) aus dem selben Material gefertigt sind wie die Schaumstoffmatten (7).

**29.** Ein Schallschutz nach Anspruch 18, dadurch gekennzeichnet, daß
die Schaumstoffmatten (7) mit eingesetzten Schallabsorbern (8) mit der Innenseite (6) der Nutzlastverkleidung (1) mit Hilfe von Unterdruck verleimt werden, wobei ein Montagerahmen (30) auf die jeweils zu verleimende Schaumstoffmatte (7) gesetzt und ein Unterdruck erzeugt wird, der gleichmäßig auf die gesamte Schaumstoffmatte (7) wirkt.

**30.** Ein Schallschutz nach Anspruch 29, dadurch gekennzeichnet, daß

- der Montagerahmen (30) aus zwei winkelförmigen Längsträgern (31) und zwei Querträgern (32) besteht, die fest miteinander verbunden sind,
- eine Abdichtmaske (33) mit runden Ausschnitten (34) zur Aufnahme der Schallabsorber (8) über den Montagerahmen (30) gelegt wird,
- die unteren Kanten der Längsträger (31) und der Querträger (32) mit Dichtlippen (35) versehen werden,
- die Längsträger (31) in der Mitte mit mindestens einer Leiste (36) verbunden sind, und
- einer der Querträger (32) mit einem Sauganschluß (37) und einem Druckregleranschluß (38) versehen ist.

**31.** Ein Schallschutz nach Anspruch 1, dadurch gekennzeichnet, daß
das Gewicht pro Flächeneinheit einschließlich des Leims für die Befestigung an der Nutzlastverkleidung (1) weniger als 3,5 kg/m$^2$ beträgt.

**Revendications**

1. Une protection acoustique du carénage de la charge utile des lanceurs non-réutilisables, dans laquelle la protection acoustique (6) est fixée sur le carénage de la charge utile (1) des lanceurs non-réutilisables, dans laquelle

   - des amortisseurs de bruit (8) réglés sur une gamme de fréquences définie sont prévus,
   - qui sont disposés sur des panneaux insonores (7) installés sur les parois intérieures (5) du carénage de la charge utile (1), au moyen de laquelle
   - chaque amortisseur de bruit (8) comprend une partie inférieure avec un alésage en forme de cuvette dans le panneau et une partie supérieure (13) munie d'un pavillon (18),
   - le pavillon (8) se termine en pointe sur une forme conique cintrée d'une ouverture de diamètre supérieur ($D_m$) jusqu'à une ouverture de diamètre inférieur ($D_t$), et
   - le pavillon (18) s'insère dans la partie inférieure (12) jusqu'à une distance donnée (a) de la base de la partie inférieure (12),

   **caractérisée en ce que**
   la partie inférieure comprend également une partie en forme de cuvette (12) fixée sur la partie supérieure (13), la partie en forme de cuvette (12) coïncidant avec l'alésage en forme de cuvette et venant se loger à l'intérieur.

2. Une protection acoustique suivant la revendication 1, caractérisée en ce que, dans la zone de diamètre inférieur ($D_t$) des fentes (21) sont prévues dans la paroi du pavillon (18).

3. Une protection acoustique suivant la revendication 2, caractérisée en ce qu'une couche perméable est appliquée sur l'ouverture de diamètre supérieur ($D_m$) du pavillon.

4. Une protection acoustique suivant la revendication 2 ou 3, caractérisée en ce que les fentes (21) possèdent des arêtes vives (21.1).

5. Une protection acoustique suivant la revendication 4, caractérisée en ce que cinq fentes (21) sont prévues qui sont décalées les unes par rapport aux autres d'un angle de 72°.

6. Une protection acoustique suivant la revendication 4 ou 5, caractérisée en ce que la largeur (b) des fentes (21) est de 5,6 mm et la hauteur (c) des fentes (21) est de 20 mm.

7. Une protection acoustique suivant la revendication 2, caractérisée en ce que

   - un rebord (17) est prévu sur le bord supérieur de la partie inférieure (12),
   - dans la zone de son ouverture de diamètre supérieur, le pavillon (18) assure une transition via un tore (19) avec un bord (20) de section angulaire, et
   - lors de l'assemblage de la partie inférieure (12) et de la partie supérieure (13), le bord angulaire (20) est relié au rebord (17) par sertissage.

8. Une protection acoustique suivant la revendication 2, caractérisée en ce que la partie inférieure (12) et la partie supérieure (13) sont en tôle.

9. Une protection acoustique suivant la revendication 6, caractérisée en ce que l'épaisseur de la tôle est inférieure à 0,5 mm, en particulier de 0,3 à 0,4 mm.

10. Une protection acoustique suivant la revendication 6, caractérisée en ce que la tôle est une tôle d'aluminium.

11. Une protection acoustique suivant la revendication 2, caractérisée en ce que la partie inférieure (12) et la partie supérieure (13) sont en plastique.

12. Une protection acoustique suivant la revendication 2, caractérisée en ce que la partie inférieure (12) et la partie supérieure (13) sont produites au moyen d'un procédé de moulage par injection.

13. Une protection acoustique suivant la revendication 2, caractérisée en ce que l'amortisseur de bruit (8) a une longueur (L) > 100 mm.

14. Une protection acoustique suivant la revendication 2, caractérisée en ce que l'amortisseur de bruit (8) a une longueur (L) de 135 mm, un diamètre (D) de 249,5 mm, un diamètre ($D_t$) du col du pavillon de 18 mm et une distance (a) de 10 mm entre le pavillon (18) et la base (14).

15. Une protection acoustique suivant la revendication 2, caractérisée en ce que l'amortisseur acoustique (8) est réglé sur une fréquence acoustique < 90 Hz, en particulier dans l'une des bandes d'octave de 31,5 et 63 Hz.

16. Une protection acoustique suivant la revendication 15, caractérisée en ce que la fréquence de résonance structurelle de l'amortisseur (8) est > 150 Hz.

17. Une protection acoustique suivant la revendication 2, caractérisée en ce que la fréquence de résonance ($f_{oSAA}$) de l'amortisseur (8) est déterminée conformément à l'équation

    où

    $S_t$ correspond à l'aire de la section rapportée au diamètre $D_t$ du col du pavillon,
    $V_H$, correspond au volume de la cellule,
    $D_t$, au diamètre du col du pavillon,
    $D_m$, au diamètre de la bouche du pavillon,
    l, à la longueur du pavillon, et
    $l^*_t + l^*_m$ sont des valeurs relatives au col et à la bouche du pavillon qui sont déterminées par des essais.

18. Une protection acoustique suivant la revendication 1, caractérisée en ce que les panneaux insonores sont des tapis en mousse (7) réalisés en polyimide réticulé.

19. Une protection acoustique suivant la revendication 1, caractérisée en ce que les tapis en mousse (7) possèdent des pores ovales de forme allongée dont les axes longitudinaux sont essentiellement disposés perpendiculairement par rapport à la zone du carénage de la charge utile (1).

20. Une protection acoustique suivant la revendication 19, caractérisée en ce que les tapis en mousse (7) sont en mousse Solimide AC-406 de la société Illbruck en Suisse.

21. Une protection acoustique suivant la revendication 20, caractérisée en ce que les tapis en mousse (7) ont une épaisseur d'environ 10 cm.

22. Une protection acoustique suivant la revendication 18, caractérisée en ce que des tapis en mousse (7) de mêmes dimensions et comportant le même nombre d'amortisseurs acoustiques (8) sont prévus.

23. Une protection acoustique suivant la revendication 18, caractérisée en ce que les tapis en mousse (7) sont recouverts d'une fine feuille de protection sur la partie supérieure (7.1) et les faces latérales (7.2).

24. Une protection acoustique suivant la revendication 23, caractérisée en ce que la feuille de protection (11) est composée d'un matériau polyester appelé Orcofilm de la société Orcon.

25. Une protection acoustique suivant la revendication 23, caractérisée en ce que la feuille de protection (11) possède des perforations.

26. Une protection acoustique suivant la revendication 18, caractérisée en ce que les amortisseurs (8) sont insérés dans des découpes circulaires (23) des tapis en mousse (7) où ils sont maintenus par un collet de sertissage (22) sur une partie supérieure (7.1) des tapis en mousse (7) et sont collés ensemble avec ces derniers, et qu'un disque en mousse collé (24) est prévu sur la base (14) de l'amortisseur de bruit (8).

27. Une protection acoustique suivant la revendication 26, caractérisée en ce que le disque en mousse (24) possède des pores ovales de forme allongée dont les axes longitudinaux sont essentiellement disposés perpendiculairement par rapport à la région du carénage de la charge utile (1).

28. Une protection acoustique suivant la revendication 27, caractérisée en ce que le disque en mousse (24) est réalisé dans le même matériau que le tapis en mousse (7).

29. Une protection acoustique suivant la revendication 18, caractérisée en ce que lorsque les amortisseurs (8) sont insérés, les tapis en mousse (7) sont collés ensemble sur la paroi intérieure (6) du carénage de la charge utile (1) grâce à l'application d'une sous-pression, et dans laquelle un cadre de montage (30) est placé sur le dessus du tapis en mousse (7) qui va être collé puis est appliquée une sous-pression qui agit sur l'ensemble du tapis en mousse (7).

30. Une protection acoustique suivant la revendication 29, caractérisée en ce que

- le cadre de montage (30) comprend deux supports linéaires angulaires (31) et deux supports transversaux (32) qui sont reliés fixement les uns aux autres,
- un masque d'étanchéité (33), qui possède des découpes circulaires (34) pour recevoir les amortisseurs acoustiques (8) est placé sur le dessus du cadre de montage (30),
- des lèvres d'étanchéité (35) sont prévues sur les bords inférieurs des supports linéaires (31) et des supports transversaux (32),
- les supports linéaires (31) sont reliés en leur milieu par au moins une bande (36), et
- un raccord d'aspiration (37) et un raccord régulateur de pression (38) sont prévus sur l'un des supports transversaux (32).

31. Une protection acoustique suivant la revendication 1, caractérisée en ce que le poids par unité de surface, y compris l'adhésif pour la fixation sur le carénage de la charge utile (1) est inférieur à 3,5 kg/m$^2$.

Fig.1

*Fig. 2*

*Fig. 3*

## Fig. 4

## Fig. 5

**Fig. 6**

**Fig. 7**

Fig. 8

Fig. 9

## Fig. 10

## Fig. 11